# EUROPEAN PATENT SPECIFICATION

(11) **EP 3 466 564 B1**
(45) Date of publication and mention of the grant of the patent: **21.07.2021**
(21) Application number: 17806116.4
(22) Date of filing: 08.03.2017
(51) Int. Cl.: B22F 1/02, B22F 7/08, B22F 1/00, B22F 7/06, B22F 9/24

(54) **METAL JOINING MATERIAL, PRODUCTION METHOD FOR SAME, AND METHOD FOR PRODUCING METAL JOINED BODY USING SAME**
METALLVERBINDUNGSMATERIAL, HERSTELLUNGSVERFAHREN DAFÜR UND VERFAHREN ZUR HERSTELLUNG EINES METALLVERBUNDENEN KÖRPERS DAMIT
MATÉRIAU D'ASSEMBLAGE DE MÉTAUX, SON PROCÉDÉ DE PRODUCTION, ET PROCÉDÉ POUR PRODUIRE UN CORPS À MÉTAUX ASSEMBLÉS À L'AIDE DE CE DERNIER

(30) Priority: 31.05.2016 JP 2016108158
(43) Date of publication of application: 10.04.2019
(73) Proprietor: Hitachi, Ltd., Tokyo 100-8280 (JP)
(72) Inventor: MORITA Toshiaki, Tokyo 100-8280 (JP); YASUDA Yusuke, Tokyo 100-8280 (JP); NOGAWA Takashi, Tokyo 100-8280 (JP)
(74) Representative: MERH-IP Matias Erny Reichl Hoffmann Patentanwälte PartG mbB
(86) International application number: PCT/JP2017/009137
(87) International publication number: WO 2017/208554

(56) References cited:
- EP-A1- 2 587 899
- WO-A1-2012/173187
- WO-A1-2013/061527
- WO-A1-2015/152625
- JP-A- 2013 136 840
- KR-A- 20150 114 603
- US-A1- 2014 287 158

## Description

### Technical Field

The present invention relates to a metal bonding material and a method for producing the same, and also relates to a method for producing a metal bonded body using the same.

### Background Art

Metal nanoparticles having a particle size of 100 nm or less have a large surface area and thus have a high reactivity, and thereby attract attention as new functional materials. Accordingly, conductive compositions containing such metal nanoparticles are expected to be used as metal bonding materials for bonding metals by sintering in electric devices that are increasingly miniaturized day by day.

Metals used for bonding are generally required to have high thermal conductivity and heat resistance. Thus, from the viewpoint of good thermal conductivity and heat resistance, it is conceivably to use gold and silver, and particularly to use inexpensive silver. However, when silver nanoparticles are used as a metal bonding material, ion migration is likely to occur at a bonding site formed.

For suppressing the ion migration, copper nanoparticles are effectively used. Copper nanoparticles are also superior in terms of thermal conductivity and cost. Copper is however easily oxidized, and thus it is conceivable that the surface of the copper particles is coated with, for example, an antioxidant. When the thus obtained copper nanoparticles are bonded by sintering, organic substances, if remain after sintering, significantly deteriorate the bonding strength. Accordingly, the copper nanoparticles are preferably washed in advance to remove the excess antioxidant.

However, when the antioxidant is removed by washing the copper nanoparticles, copper nanoparticles are oxidized into copper (I) oxide (Cu₂O) or copper (II) oxide (CuO) . When copper nanoparticles are thus converted into copper oxides, sintering by heating in the atmosphere becomes difficult, and also in the case of bonding under a reductive atmosphere, the thermal conductivity and electric resistance are largely decreased due to the volumetric shrinkage in the part converted to the copper oxide. Thus, there is a need for a technique for enhancing oxidation resistance while maintaining bonding strength.

A known technique for enhancing oxidation resistance is disclosed in PTL 1. PTL 1 discloses a conductive composition containing copper as a filler, the composition including: a metal powder containing a copper powder with an average particle size of 0.3 to 20 *µ*m and a fine copper powder with an average particle size of 1 to 50 nm; a solvent containing polyhydric alcohol having two or more OH groups, such as ethylene glycol or diethylene glycol; and an additive containing a compound having two or more COOH groups and one or more OH groups, the number of the COOH groups being equal to or more than the number of the OH groups, such as malic acid or citric acid.

### Citation List

### Patent Literature

PTL 1: JP-A-2007-258123 (in particular, see, for example, paragraphs 0013 and 0014)
PTL 2: WO 2015/152625 A1
PTL3: EP 2587899 A1

### Summary of Invention

### Technical Problem

In the technique disclosed in PTL 1, a conductive composition containing copper powder and a polymer is prepared by mixing and kneading a copper powder previously prepared so as to have a prescribed particle size, ethylene glycol, and citric acid (see paragraph 0037 of PTL 1). According to the description, oxidation of the copper powder is suppressed by the polymer produced in the process (see paragraph 0026). However, since a polymer and a copper powder which have different specific gravities are kneaded in this technique, the copper powder may be unevenly present in the conductive composition depending on the size and mass of the contained copper powder, and the copper powder is possibly oxidized depending on the location thereof. That is, the technique disclosed in PTL 1 is unsatisfactory as a technique for enhancing oxidation resistance of copper nanoparticles. PTL2 describes an ink composition for light sintering, a wiring board using the same and a manufacturing method therefore. The ink composition for light sintering comprises copper oxide nanoparticles having a copper oxide film, a reducing agent for reducing copper oxidized by light radiation to form copper nanoparticles, a dispersing agent, a binder and a solvent. PTL3 describes a metal bonding material which is a liquid or a paste containing copper nanoparticles having a particle diameter of 1000 nanometer or less, in which the copper nanoparticles have one or more particle diameter peaks of a number based grain size distribution within the class of particle diameter of 1 to 35 nanometers and within the class of particle diameter of more than 35 nanometers and 1000 nanometers or less respectively.

The present invention has been made in view of the problem, and a problem that the present invention is to solve is directed to a metal bonding material that is excellent in oxidation resistance and shows good bonding strength and a method for producing the same, and to a method for producing a metal bonded body using the same.

### Solution to Problem

The present inventors made intensive and extensive studies to solve the problem. The above problem is solved by the subject matter according to the independent claims . Further preferred developments are claimed by the dependent claims. As a result, they have achieved the findings described below, completing the present invention. Specifically, the gist of the present invention relates to a metal bonding material characterized by consisting essentially of: copper nanoparticles, the copper nanoparticles including an aggregate of a plurality of single crystals having a crystallinity and each having a particle size of less than 10 nm and each of the copper nanoparticles having a copper oxide layer containing copper oxide formed in a surface of the copper nanoparticle; and an organic solvent, the solvent having a boiling point of 200°C to 250°C and having a chain structure having a hydroxy group at an end of the chain structure. Other solutions will be described below in the Description of Embodiments. Advantageous Effects of Invention

According to the present invention, it is possible to provide a metal bonding material that is excellent in oxidation resistance and shows good bonding strength and a method for producing the same, and a method for producing a metal bonded body using the same.

### Brief Description of Drawings

[Fig. 1] It is a view schematically illustrating a structure of a copper nanoparticle contained in a metal bonding material of this embodiment.
[Fig. 2] It is X-ray diffraction patterns measured respectively for the copper nanoparticles of Example 1 and Comparative Example 1.
[Fig. 3] It is a graph showing results of the shear strength test on tested bodies.
[Fig. 4] It is a graph showing the variation of the relative strength ratio against varied thickness of a copper oxide film.
[Fig. 5] It is a graph showing the variation of the relative strength ratio against varied amount of an organic solvent contained in a metal bonding material.

### Description of Embodiments

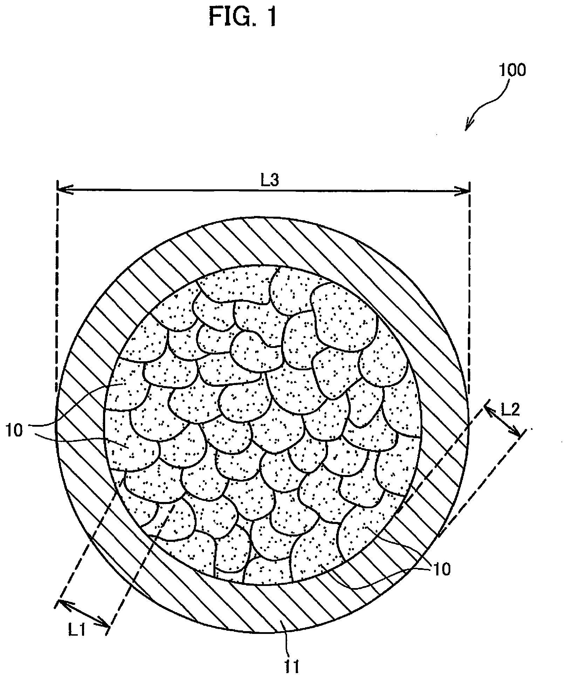

A mode for carrying out the present invention (an embodiment) will be described while appropriately referring to the drawings. The structure illustrated in Fig. 1 referred to below is schematically drawn, and the dimensions, the relative sizes, the detailed shapes, and the like may differ from those in actual structures.

### [1. Metal bonding material]

### (Copper nanoparticle)

Fig. 1 is a view schematically illustrating a structure of a copper nanoparticle 100 contained in a metal bonding material of this embodiment. The copper nanoparticle 100 has, as a basic structure, a particle-like structure in which a plurality of copper single crystals 10 are aggregated, and has formed in the surface thereof a copper oxide film 11 (copper oxide layer) composed of copper oxide. The copper oxide film 11 is preferably formed so as to cover the entire surface of the copper nanoparticle 100, but this is not necessary and the copper oxide film 11 may simply exist in a part of the surface.

The single crystal 10 is also referred to as a crystallite or a crystal grain, and has crystallinity. Here, it is considered according to the studies of the present inventors that distinct crystallinity of a particle leads to good sinter bonding. This is supposedly because diffusion among particles hardly proceeds in an amorphous state. Thus, in this embodiment, the single crystals 10 having crystallinity are used.

A size L1 (particle size, so-called crystalline size) of the single crystal 10 is 0.1 nm to 10 nm as the particle size. When the size L1 of the single crystal 10 is less than 0.1 nm, the single crystal 10 is nearly in an amorphous state, and good sinter bonding may not be achieved. When the size L1 of the single crystal 10 exceeds 10 nm, the particle itself is in a stable state and a low temperature sintering phenomenon is not likely to occur so that good sinter bonding may also not be achieved. The size L1 can be measured with an X-ray diffractometer (XRD).

The copper oxide film 11 is formed of copper oxide in a surface of the copper nanoparticle 100. The copper oxide film 11 may however contain an arbitrary component to the extent that the effects of the present invention are not impaired. A thickness L2 of the copper oxide film 11 is preferably 1 nm to 50 nm, and more preferably 10 nm to 40 nm. When the thickness L2 of the copper oxide film 11 is 1 nm or more, the normal temperature fusion (coarsening) of the adjacent copper nanoparticles 100 can be sufficiently prevented, and strong bonding can be performed by sintering to sufficiently increase the bonding strength. When the thickness L2 of the copper oxide film 11 is 50 nm or less, the volumetric shrinkage involved in sintering can be reduced, leading to a dense sinter layer and sufficiently increased bonding strength.

The thickness L2 of the copper oxide film 11 can be measured with a transmission electron microscope (TEM). Specifically, for example, the copper nanoparticle 100 is filled with a resin, then a sectional thin film sample of the copper nanoparticle 100 is prepared using a focused ion beam device (FIB device), and the cross section of the copper nanoparticle 100 is observed with a TEM, whereby the thickness L2 of the copper oxide film 11 can be measured.

The thickness L2 of the copper oxide film 11 may be uneven in the entire copper nanoparticle 100. In this case, an average of the thicknesses L2 of the copper oxide film 11 is preferably within the aforementioned range.

The size L3 (particle size) of the copper nanoparticle 100 itself is preferably 20 nm to 500 nm, more preferably 50 nm to 450 nm, further preferably 75 nm to 400 nm, still further preferably 100 nm to 350 nm, and particularly preferably 200 nm to 300 nm. With L3 less than 20 nm, the ratio of the copper oxide film to the coated copper particle as a core is large to increase the volumetric shrinkage and good sinter bonding may be not achieved. On the other hand, with L3 exceeding 500 nm, the low temperature sintering phenomenon by fine particles is less likely to occur and good sinter bonding may also be not achieved. The L3 of the copper nanoparticle 100 can be measured in the same manner for the measurement of the thickness L2 of the copper oxide film 11.

As described above, the copper oxide film 11 is formed in a surface of the copper nanoparticle 100 contained in the metal bonding material of the embodiment. Since the copper oxide constituting the copper oxide film 11 is stable in the atmosphere, oxidization does not further proceed toward the inside thereof at normal temperature unless excessive water or temperature is applied. Thus, by previously forming the oxide film 11 having a controlled thickness in a surface of the copper nanoparticle 100, long-term storage under an environment of a constant temperature and humidity becomes possible. In addition, by suppressing new formation of copper oxide, the amorphous nature due to the copper oxide is prevented from appearing, developing high bonding strength due to the crystalline copper.

In the copper nanoparticle 100, the copper single crystals 10 are protected from new oxidation by the copper oxide 11 as described above, and this is different from protection by, for example, an organic material. That is, when the copper single crystals are protected by a stable (that is, hardly volatile) organic material, a large amount of residue remains by sintering in bonding and the bonding strength is likely to decrease. On the other hand, when an unstable (that is, easily volatile) organic material is used in order to reduce the residue, the organic material is easily vaporized to get out of the system. Thus, further oxidation of the copper is likely to proceed to increase copper oxide, and the bonding strength is also decreased. However, when the metal bonding material of the embodiment is subjected to sintering, the sintering is performed under a reductive atmosphere, which causes reduction of the surface copper oxide into copper, and thus any residue does not remain after the sintering, which will be described in detail later. Accordingly, it is possible to sufficiently increase the bonding strength.

### (Organic solvent)

The organic solvent contained in the metal bonding material of the embodiment has a boiling point of 200°C to 250°C, and has a chain structure having a hydroxy group at an end of the chain structure.

The boiling point of the organic solvent is 200°C to 250°C as described above. When the boiling point of the organic solvent is 200°C or higher, the temperature can be made higher than the temperature at which the reduction of copper oxide begins (generally 200°C or lower), and thus the reduction of copper oxide can proceed in a state where the organic solvent remains, which will be described in detail later. When the boiling point of the organic solvent is 250°C or lower, vaporization of the organic solvent can be retarded, and the reduction of copper oxide can proceed in a state where the organic solvent remains as in the case of the boiling point of 200°C or higher.

The molecular structure of the organic solvent contained in the metal bonding material of the embodiment is a chain structure which has a hydroxy group (-OH) bound to an end of the chain structure. Due to having a chain structure and having a hydroxy group bound to an end thereof, the reduction reaction of copper oxide by hydrogen present in the atmosphere in sintering can be facilitated, which will be described in detail later. Specifically, according to the study of the present inventors although the details are not clear, a hydroxy group bound to an end of the chain structure can rotate or otherwise move relatively more freely in the molecule as compared with the case where bound to the middle of the chain structure. Thus, in sintering under a reductive atmosphere, the hydroxy group is likely to come in contact with hydrogen, and the reduction of the copper oxide is supposedly facilitated due to the interaction of the hydroxy group and the hydrogen in contact therewith.

Examples of organic solvents having such physical properties include aliphatic organic solvents and aromatic organic solvents, and specific examples include diethylene glycol monobutyl ether and diethylene glycol monohexyl ether. Among them, an aliphatic organic solvent is preferred as the organic solvent. With an aliphatic organic solvent, side reactions can be sufficiently suppressed. Among aliphatic organic solvents, diethylene glycol monobutyl ether and diethylene glycol monohexyl ether are preferred. The solvent, particularly when it is heated, easily functions to promote the reduction of the copper oxide film on the copper particle and thereby enhance the sintering properties and the bonding properties. The solvents do also not react with copper particles in any way at room temperature and therefore can be stored for a long period of time. Thus, such solvents can increase the storability. One organic solvent may be used alone or two or more organic solvents may be used in any combination in any ratio.

### (Physical properties)

The metal bonding material of the embodiment contains the copper nanoparticles (copper nanoparticles 100 described with reference to Fig. 1) and the organic solvent described above. The content of the organic solvent is preferably 12% by mass or less based on the total content of the copper nanoparticles and the organic solvent. With a content of the organic solvent within the range, a sufficient content of the copper nanoparticles is secured to ensure high bonding strength. Furthermore, the viscosity of the metal bonding material can be at an appropriate level to reduce the spread of the metal bonding material in application thereof. The lower limit of the organic solvent content is preferably 5% by mass or more based on the total content of the copper nanoparticles and the organic solvent from the viewpoint of easy application due to a paste form of the metal bonding material.

Other components than the copper nanoparticle and the organic solvent may be contained in the metal bonding material to the extent that the effects of the present invention are not significantly impaired.

The metal bonding material of the embodiment is suitable as a material used in bonding in the fields of electronic packaging and catalyst, for example.

### [2. Method for producing metal bonding material]

The metal bonding material of the embodiment can be produced by the following method. Significantly, for example, a metal bonding material can be produced through at least a precursor dissolution step in which a copper nanoparticle precursor containing a copper ion is dissolved in a solvent containing water to thereby obtain an aqueous solution containing copper ions, a copper production step in which the aqueous solution is heated at a temperature of 60°C to 90°C for 1 hour to 5 hours while allowing an inert gas to flow in the aqueous solution to thereby produce elemental copper particles in the aqueous solution, a copper oxide film formation step in which the inert gas allowed to flow in the copper production step is stopped to form a copper oxide film composed of copper oxide on the surface of the elemental copper particles produced in the aqueous solution to thereby obtain copper nanoparticles, a separation step in which the copper nanoparticles produced in the copper oxide film formation step are separated from the aqueous solution, and a mixing step in which the copper nanoparticles separated in the separation step are mixed with an organic solvent having a boiling point of 200°C to 250°C and having a chain structure having a hydroxy group at an end of the chain structure.

### (Precursor dissolution step)

In this step, a copper nanoparticle precursor containing a copper ion is dissolved in a solvent containing water to thereby obtain an aqueous solution containing copper ions. The copper nanoparticle precursor used herein contains a copper ion, and any one that can be dissolved in water (can be ionized to release a copper ion in water) can be used. Among them, the copper nanoparticle precursor is preferably an inorganic salt, and is more preferably such a compound that particularly contains the element for the intended copper nanoparticles and leaves a small amount of residues, such as anions, after dissolution. Specific examples of such copper nanoparticle precursors include copper chloride, copper hydroxide, copper oxides (for example, copper (I) oxide or copper (II) oxide), and copper carboxylate (for example, copper acetate). When copper oxides are used, the pH is preferably adjusted, for example, by using an acid, such as hydrochloric acid or hydrazine, together to facilitate dissolution in water. Among them, copper chloride, copper hydroxide, and copper carbonate are preferred because of the particularly small amount of impurities after dissolution and residues after the subsequent step.

When the copper nanoparticle precursor is dissolved in water, the amount of the copper nanoparticle precursor dissolved is preferably such an amount that gives a copper ion concentration of 0.01 mol/L to 5 mol/L. When copper nanoparticle precursor is dissolved in such an amount that gives a copper ion concentration of 0.01 mol/L or more, a certain amount or more of copper ions can be dissolved in water to sufficiently increase the yield. When the copper ion precursor is dissolved in such an amount that gives a copper ion concentration of 5 mol/L or less, the aggregation of the copper nanoparticles produced in the subsequent step can be surely prevented.

When the copper nanoparticle precursor is dissolved in water, an inert gas is preferably allowed to flow in water. Examples of usable inert gases include nitrogen gas, argon gas, and helium gas. As a form of flowing, for example, an inert gas can be diffused in the aqueous solution with a diffuser tube.

When the copper nanoparticle precursor is dissolved in water, a dispersant, such as cetyltrimethylammonium bromide (CTAB), may be used together from the viewpoint of increasing dispersibility of the copper nanoparticle precursor in water. An organic solvent may also be used together with water. By using an organic solvent together, the reaction rate and the particle size of the obtained copper particles can be easily controlled. Examples of usable organic solvents include alcohols, such as ethanol, methanol, isopropyl alcohol, and 2-ethylhexyl alcohol; aldehydes, such as acetaldehyde; polyols, such as glycol; aliphatic hydrocarbons, such as hexane and cyclohexane; and aromatic hydrocarbons, such as toluene, xylene, and benzene. One organic solvent may be used alone or two or more may be used in combination. The organic solvent may be used in any amount. A pH modifier, such as hydrazine, for example, may be used from the viewpoint of adjusting the pH of the aqueous solution.

### (Copper production step)

This step is a step in which the aqueous solution is heated at a temperature of 60°C to 90°C for 1 hour to 5 hours while allowing an inert gas to flow in the aqueous solution to thereby produce elemental copper particles in the aqueous solution. In the surface of the copper particles produced here, the oxidation of copper is suppressed by the inert gas flowing in water, and the formation of copper oxide film hardly occurs.

The inert gas flowing in the aqueous solution may be any one that can suppress the oxidation in the surface of the copper particles, and examples include nitrogen gas, argon gas, and helium gas.

The heating temperature is a temperature in the range of 60°C to 90°C as described above. By heating at a temperature in this range, the amount of the copper nanoparticles produced can be closer to the theoretical value given by calculation. At the heating temperature less than 60°C, a sufficient reaction is not achieved and the amount of the copper nanoparticles collected is small, leading to higher cost. On the other hand, at the heating temperature exceeding 90°C, the oxidation is excessively promoted in some cases and copper nanoparticles excellent in bonding properties may not be obtained.

Since the size of the copper particles (the size L3 as described above with reference to Fig. 1) is determined by the level of the heating temperature, the heating temperature may be appropriately changed in the temperature range according to the desired size L3 together with the heating time described later. Specifically, when a larger size of copper particles is desired, the heating temperature may be increased. On the other hand, when a smaller size of copper particles is desired, the heating temperature may be decreased. At a temperature in this range, precipitation of the elemental copper particles is facilitated while avoiding boiling of the aqueous solution. However, the heating temperature is preferably 70°C to 85°C. At a temperature in this range, copper nanoparticles having an appropriate size can be securely produced.

The heating time is 1 hour to 5 hours as described above. Also by the length of the heating time, the size L3 of the precipitated copper particles varies. Thus, the heating time may be appropriately changed according to the desired size L3. Specifically, when a large size of copper particles is desired, the heating time may be increased. On the other hand, when a smaller size of copper particles is desired, the heating time may be decreased. When the heating time is 1 hour or longer, the reaction sufficiently proceeds and the yield can be sufficiently increased. When the heating time is 5 hours or shorter, the copper nanoparticles can be produced in as short as possible time while ensuring a high yield, which is suitable in an industrial process.

### (Copper oxide film formation step)

This step is a step in which the inert gas allowed to flow in the copper formation step is stopped to form a copper oxide film composed of copper oxide on the surface of the elemental copper particles produced in the aqueous solution to thereby obtain copper nanoparticles. As described above, oxidation of copper in the surface of the elemental copper particles is suppressed by the inert gas. However, since a slight amount of dissolved oxygen is contained in water, the stop of the inert gas flowing results in progress of the oxidation on the copper surface by the dissolved oxygen to form the copper oxide film.

The thickness of the copper oxide film formed here (the thickness L2 as described above with reference to Fig. 1) is controlled by the treatment in this step. That is, when the time of standing after stopping the inert gas is longer, the oxidation proceeds further and the thickness of the copper oxide film is larger. On the other hand, when the time of standing is shorter, the oxidation is suppressed and the thickness of the copper oxide film is smaller. For example, in a usual amount of the dissolved oxygen, standing for about 1 hour can give a thickness L2 of about 10 nm. If it is desired to allow the oxidation to proceed to facilitate the formation of the copper oxide film, for example, air or the like may be allowed to flow to increase the amount of the dissolved oxygen.

Since the surface of the elemental copper particles produced is protected by a stable oxide film in this step, further oxidation of the copper particles is suppressed. This leads to preventing the copper particles themselves from fully becoming the oxide state, which possibly occurs in natural oxidation.

When the oxidation of copper particles is stopped, an antioxidant, such as citric acid or ascorbic acid, may be added. The addition of an antioxidant makes it possible to stop the progress of surface oxidation due to the dissolved oxygen.

### (Separation step)

This step is a step in which the copper nanoparticles produced in the copper oxide film formation step are separated from the aqueous solution. Specifically, for example, the aqueous solution is subjected to mild centrifugation, whereby the produced copper nanoparticles can be separated and collected as a precipitate. Since the collected copper nanoparticles have a stable copper oxide film formed in a surface thereof, further oxidation is suppressed even when exposed to the atmosphere. The collected copper nanoparticles may be washed with water or the like and dried, as needed.

### (Mixing step)

This step is a step in which the copper nanoparticles separated in the separation step are mixed with an organic solvent having a boiling point of 200°C to 250°C and having a chain structure having a hydroxy group at one end of the chain structure. Specifically, the copper nanoparticles produced in the above manner and the organic solvent as described above in the [1. Metal bonding material] are mixed at a desired ratio, whereby the metal bonding material of the embodiment can be obtained. The metal bonding material may be in any form, but from the viewpoint of easy application as described in detail later, a paste form obtained by adjusting the content of the organic solvent is preferred.

### [3. Metal bonded body]

A metal bonded body can be produced by using the metal bonding material of the embodiment. The metal bonded body, as used herein, refers to those used in the electronic packaging field or in the catalyst field, and specific examples include those used in bonding and wiring of power devices, such as SiC modules and IGBT modules, and in structures in which metals are bonded together. A method for producing the metal bonded body using the metal bonding material of the embodiment will be described below.

The metal bonded body can be produced through at least an application step in which the metal bonding material of the embodiment is applied to a surface of a first structure composed of a first metal, a contacting step in which a second structure composed of a second metal is brought into contact with the surface having the metal bonding material applied in the application step to thereby make a state where the first structure is in contact with the second structure via the metal bonding material, and a bonding step in which the metal bonding material is heated at a temperature of 300°C to 400°C under a reductive atmosphere in the state where the first structure is in contact with the second structure via the metal bonding material to thereby obtain a metal bonded body in which the first structure is bonded to the second structure.

### (Application step)

This step is a step in which the metal bonding material of the embodiment is applied to a surface of a first structure composed of a first metal. The first metal, as used herein, is preferably a metal having no strong oxide film formed on the surface thereof, and specific examples include copper, nickel-plated copper, nickel-plated aluminum, gold-plated nickel, and silver-plated nickel. Thus, this step can be performed by applying the metal bonding material of a paste form on a surface of, for example, an electrode of such a metal (preferably in a part in which copper, nickel, or a precious metal is exposed) as the first structure.

### (Contacting step)

This step is a step in which a second structure composed of a second metal is brought into contact with the surface having the metal bonding material applied in the application step to thereby make a state where the first structure is in contact with the second structure via the metal bonding material. As used herein, the second metal is, for example, the same metal as the first metal as described above. Accordingly, this step can be performed by bringing, for example, an electrode composed of a second metal as the second structure into contact with a surface of the metal bonding material on the first structure surface.

### (Bonding step)

This step is a step in which the metal bonding material is heated at a temperature of 250°C to 400°C under a reductive atmosphere in the state where the first structure is in contact with the second structure via the metal bonding material to thereby obtain a metal bonded body in which the first structure is bonded to the second structure. The heating temperature here is 250°C to 400°C and may be appropriately determined according to the type of the metal structure to be produced. When the heating temperature is 250°C or higher, the organic solvent is vaporized while promoting the reduction of the copper oxide layer formed in the surface of the copper nanoparticles. At a temperature of 400°C or lower, oxidation of the organic solvent is prevented.

The heating time may be, for example, from several minutes to several tens of minutes. The atmosphere in heating is a reductive atmosphere. Specifically, for example, the heating may be performed in hydrogen stream. By heating in this manner, while vaporizing the organic solvent contained in the metal bonding material, the copper oxide in the surface of the copper nanoparticles can be reduced by the hydroxy group contained in the unvaporized organic solvent remaining in the metal bonding material and hydrogen. Due to the above effects, elemental copper particles having crystallinity is finally contained in the metal bonding material, which leads to even bonding, resulting in high bonding strength.

### Examples

The embodiment will be described more specifically with reference to examples.

### <Example 1 and Comparative Example 1>

First, copper nanoparticles were produced according to the method described above in [2. Method for producing metal bonding material]. 0.0269 g (final concentration 1.0×10⁻² mol/l) of copper chloride anhydride (CuCl₂) as a copper nanoparticle precursor, 0.0364 g (final concentration 5.0×10⁻³ mol/l) of CTAB as a dispersant, and 0.256 g (final concentration 0.4 mol/l) of hydrazine as a pH modifier were put in a 100 ml beaker. A small amount of water (solvent) was added to thoroughly dissolve the mixture, and the solution was diluted with water so as to prepare 20 ml of an aqueous solution. Nitrogen was sufficiently diffused in the aqueous solution, and the diffusion was further continued. The diffusion was performed by bubbling from a pure nitrogen cylinder via a reducing valve and through a vinyl chloride hose.

While performing diffusion with nitrogen, the aqueous solution was heated at 80°C for 5 hours with a heater (a hotplate manufactured by Hitachi Consumer Marketing Inc.) . Then, from 5 hours after the start of the heating, the heat was slowly released to room temperature. This heating caused precipitation of elemental copper particles in the aqueous solution. The nitrogen gas diffusion was stopped, and the mixture was stirred slowly with a magnetic stirrer at room temperature for 3 hours. The surface of the copper particles in the aqueous solution was oxidized by the dissolved oxygen to form copper oxide film on the surface of the copper particles, whereby the copper nanoparticles of the embodiment was produced.

After stirring for 3 hours, 0.00576 g (final concentration 1.5×10⁻³ mol/l) of citric acid anhydride was added as an antioxidant and the mixture was slowly mixed by stirring to stop the oxidation by the dissolved oxygen. After addition of citric acid, the copper nanoparticles were subjected to centrifugal washing with a centrifugal washing machine (Suprema 21 manufactured by TOMY SEIKO Co., Ltd.) three times. After the centrifugal washing, the copper nanoparticles were taken out and dried by keeping at 50°C for 1 hour. Through the drying, copper nanoparticles of Example 1 were obtained. The obtained copper nanoparticles had a mass of 0.0127 g.

For the copper nanoparticles obtained in Example 1, the size of single crystal (the size L1 as described above with reference to Fig. 1) was measured with an XRD meter (RU200B manufactured by Rigaku Corporation) . As a result, the single crystal had a size of 5 nm. It was confirmed with a TEM (H9000 manufactured by Hitachi High-Technologies Corporation, acceleration voltage 300 kV) that a copper oxide film was formed in a surface of the copper nanoparticle. The thickness of the formed copper oxide film (the thickness L2 as described above with reference to Fig. 1) was measured according to the method described in the Description of Embodiments, and then the thickness of the copper oxide film was about 20 nm throughout the periphery. The sizes of the copper nanoparticles (the size L3 as described above with reference to Fig. 1) were measured with the same TEM, and then the sizes L3 were all in the range of about 200 nm to 500 nm.

Meanwhile, as Comparative Example, copper nanoparticles were produced by a wet reduction method as follows with reference to a method described in Szu-Han Wu and Dong-Hwang Chen, Journal of Colloid and Interface Science Vol. 273, 165-169 (2004). First, 4 kg of copper (II) sulfate pentahydrate, 120 g of amino acetate, and 50 g of sodium phosphate were added to 6 L of pure water at 70°C, and the mixture was thoroughly stirred. Then, the volume of the aqueous solution was made to 8 L with pure water of 70°C, and the stirring was further continued for 30 minutes.

Next, while stirring the aqueous solution, 5.8 kg of a 25 mass% aqueous sodium hydroxide solution was added to the aqueous solution, and stirring was continued for 30 minutes. After the stirring of 30 minutes, 1.5 kg of glucose was added and stirring was continued for further 30 minutes. After the stirring of 30 minutes, while further stirring the aqueous solution, 1 kg of a 100 mass% hydrated hydrazine (N₂H₄·H₂O) was added slowly over 5 minutes, and then stirring was continued for 1 hour to complete the reaction.

After the completion of the reaction, the obtained reaction mixture was filtered with a Nutsche, and then was washed with pure water and methanol, thereby obtaining 0.0129 g of copper nanoparticles of Comparative Example 1.

In the obtained copper nanoparticles of Comparative Example 1, the formation of a copper oxide film was confirmed in the same manner as in Example 1, and the size of the single crystal and the thickness of the copper oxide film were measured. As a result, the size of the single crystal was much larger than 10 nm, and the specific value was about several tens of nanometers. The copper nanoparticle was observed with a TEM and arbitrary 10 particles were selected in the observed cross section to obtain the average particle size. Then, the average particle size was about 1 µm which was significantly larger than the copper nanoparticles of Example 1. As a result of observation with a TEM, it was confirmed that copper oxide was formed in a surface of the copper nanoparticle, and the thickness of the copper oxide film was several hundreds of nanometers throughout the periphery of the copper nanoparticle.

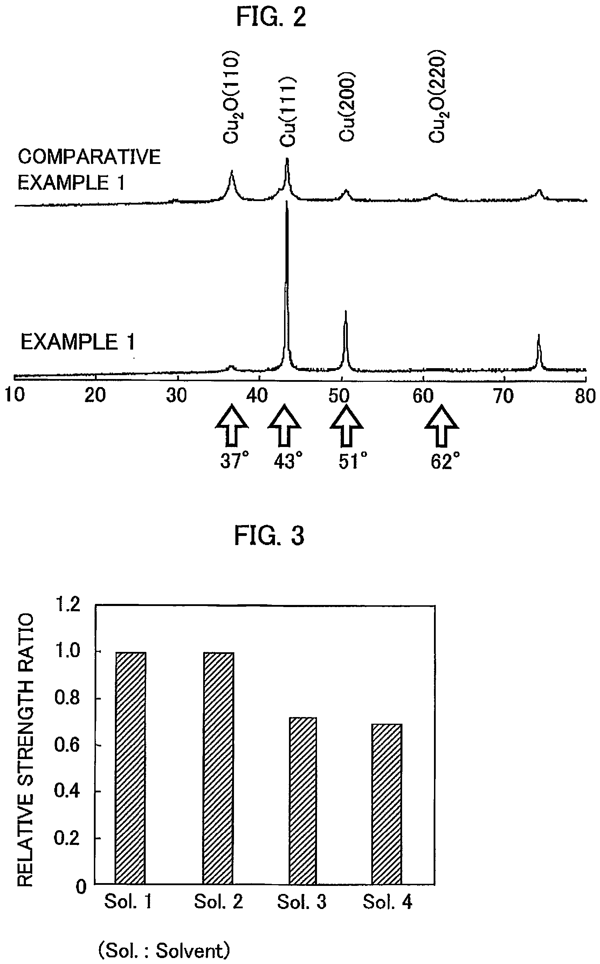

For each of copper nanoparticles produced in Example 1 and Comparative Example 1, an X-ray diffraction pattern was measured using the aforementioned XRD meter. The scanning speed was 2 deg/min. Fig. 2 shows the results.

Fig. 2 shows X-ray diffraction patterns respectively measured for copper nanoparticles of Example 1 and Comparative Example 1. In both of Example 1 and Comparative Example 1, a peak of Cu₂O (110) was observed around 37°, and peaks of Cu (111) and Cu (200) were observed around 43° and 51°. In Comparative Example 1, a peak of Cu₂O (220) was observed around 62°. Thus, it was found that both of the copper nanoparticles of Example 1 and Comparative Example 1 contained elemental copper and copper oxide.

Regarding the area of the peaks (that is, the production amounts of the respective components), the Cu peaks (around 43° and around 51°C) had large areas, there was almost no Cu₂O (110) peak (around 37°), and there was no Cu₂O (220) peak (around 62°) in Example 1. Thus, it is considered that the copper nanoparticle in Example 1 was mostly constituted of copper and contains copper oxide in a small amount. Accordingly, excessive oxidation of copper did not occur and the copper nanoparticles of Example 1 showed high oxidation resistance.

On the other hand, in Comparative Example 1, in comparison of the Cu peaks (around 43° and around 51°) and the Cu₂O peaks (around 37° and around 62°), there was no remarkably large peak, and the peaks had a similar area to an extent. Thus, it was found that the oxidation of copper had proceeded in the copper nanoparticles in Comparative Example 1 and the copper nanoparticles were inferior in oxidation resistance.

### <Example 2>

Copper nanoparticles were produced in the same manner as in Example 1 except that 0.0195 g (final concentration 1.0×10⁻² mol/l) of copper hydroxide (Cu(OH)₂) was used as a copper nanoparticle precursor and 0.00384 g (final concentration 1.0×10⁻³ mol/l) of citric acid was used for stopping the oxidation. The mass of the copper nanoparticles of Example 2 produced was 0.0125 g.

In the obtained copper nanoparticles of Example 2, the formation of copper oxide film was confirmed in the same manner as in Example 1 and the size of the single crystal, the thickness of the copper oxide film, and the size of the copper nanoparticle were measured. As a result, the size of the single crystal was at the same level as in Example 1, and the specific value was 5 nm. A particle cross section was observed by TEM, and then copper oxide film was formed on the periphery as in Example 1, and the thickness was about 20 nm throughout the periphery. The sizes L3 were measured in the same manner as in Example 1, and then the sizes L3 were all in the range of about 200 nm to 500 nm.

For the copper nanoparticles of Example 2, the X-ray diffraction peaks were measured in the same manner as in Example 1. As a result, although not shown, significantly large peaks corresponding to Cu (111) and Cu (200) were observed as in Example 1, whereas a slight peak corresponding to Cu₂O (110) was observed. Accordingly, also in the copper nanoparticles of Example 2, excessive oxidation of copper did not occur, and the copper nanoparticles of Example 2 showed high oxidation resistance.

### <Example 3>

In Example 3, the metal bonding material of the embodiment was produced using the copper nanoparticles of Example 1 described above. Then, metals were bonded to each other using the produced metal bonding material, and evaluation by a bonding strength test was performed.

As an organic solvent for use in the production of the metal bonding material, diethylene glycol monobutyl ether (solvent 1), diethylene glycol monohexyl ether (solvent 2), diethylene glycol monoethyl ether acetate (solvent 3), and triethylene glycol dimethyl ether (solvent 4) were used. Among the solvents, the solvents 1 and 2 are "an organic solvent having a boiling point of 200°C to 250°C and having a chain structure having a hydroxy group at an end thereof" (an organic solvent as described above in the [1. Metal bonding material]). The solvents 3 and 4 have a boiling point of 200°C to 250°C but have no hydroxy group at an end thereof.

The copper nanoparticles of Example 1 and each of the organic solvents described above were weighed in amounts to give a mass ratio of 89:11 and were thoroughly mixed to produce a paste-like metal bonding material (four types). The mixing was performed using a kneader manufactured by Thinky Corporation. For producing a more uniform paste here, an organic solvent that was weighed in advance was provided and the weighed copper nanoparticles of Example 1 were put in the organic solvent and mixed therewith. It has been said, but experimentally, that when an organic solvent is put in copper nanoparticles, uniform mixing is difficult in some cases, and thus the mixing method in which an organic solvent is provided in advance was adopted. Then, the obtained four metal bonding materials were applied on surfaces of four first circular copper test pieces (having 10 mm diameter and 5 mm thickness), respectively. A second copper test piece (circular, having 5 mm diameter and 2 mm thickness) having a size different from the first copper test pieces was placed on each of the applied surfaces and was lightly pushed to thereby allow the metal bonding material to come in contact with the entire surface of the upper copper test piece. Four structures were obtained in this manner.

Then, the obtained four structures were heated in hydrogen stream at 350°C for 5 minutes. In this process, a hydrogen furnace manufactured by Shinko Seiki Co., Ltd. was used as a heater. The structures were placed in the heater with the first copper test pieces located on the lower side, and then the structures were heated. In the heating, a pressure of 0.1 MPa was applied to the entire surfaces of the second copper test pieces located on the upper side. By this heating, four test bodies for evaluation by a bonding strength test were obtained.

The evaluation by a bonding strength test was performed by a shearing test using each test body. The shearing test was performed with a bond tester, SS-100KP, manufactured by Seishin Trading Co. Ltd. (maximum load 100 kg), and the second copper test piece on the upper side and the first copper test piece on the lower side were pushed in different direction from each other. With a shear rate of 30 mm/min, the test body was broken with a shearing tool to measure the maximum load at the breaking. The maximum load was divided by the bonding area to obtain the shear strength of the test body. Fig. 3 shows the results.

Fig. 3 is a graph showing the results of the shear strength test on the test bodies. In the graph shown in Fig. 3, the item "solvent 1" represents a bonding strength of the structure obtained using the metal bonding material containing the solvent 1, and the similar explanation was applied to the items "solvent 2", "solvent 3", and "solvent 4". In the graph shown in Fig. 3, the relative ratio to the bonding strength of the structure obtained using the metal bonding material containing the solvent 1 which was taken as 1.0 was shown.

As shown in Fig. 3, when using "an organic solvent having a boiling point of 200°C to 250°C and having a chain structure having a hydroxy group at an end thereof", the relative strength ratios were significantly the same level (solvents 1 and 2) . The results are supposedly given by the interaction of the copper oxide film formed in the surface of the copper nanoparticles with the hydroxy group in the solvent and hydrogen in the atmosphere since both the organic solvents 1 and 2 have a hydroxy group at one end of a chain structure.

In the copper nanoparticles of Example 1, since the thickness of the copper oxide film formed in the surface is small, the volumetric shrinkage involved in the reduction can be sufficiently reduced. Thus, the strain involved in the reduction of copper oxide can be sufficiently reduced, thereby achieving further superior bonding strength.

However, when using the solvents 3 and 4 which are different from the above, the relative strength ratios were about 0.7 and were smaller as compared with those in the solvents 1 and 2. The reason is considered that no hydroxy group is bound to an end of the chain structures of the organic solvents 3 and 4, and reduction of copper oxide was not promoted.

### <Example 4>

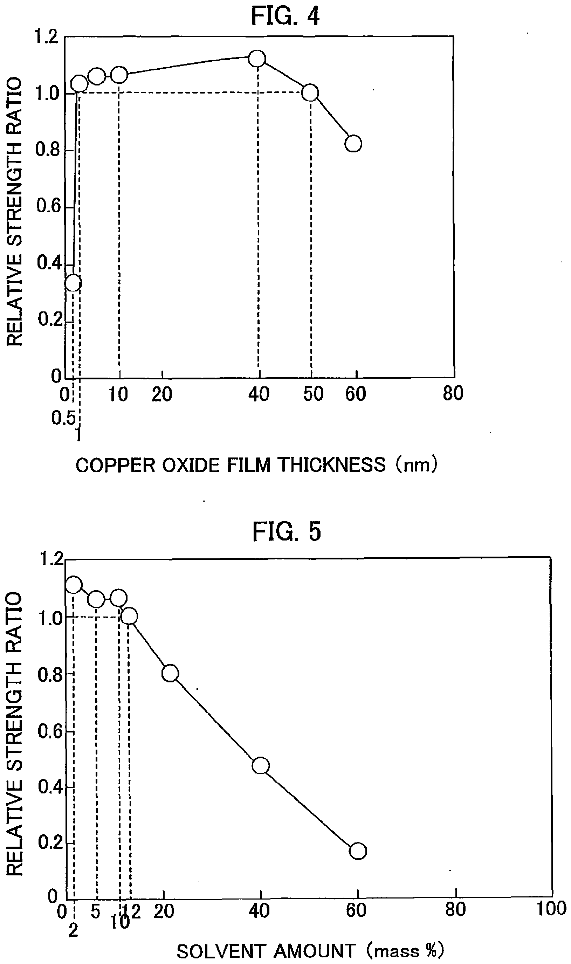

In Example 4, how varied the bonding strength is according to the thickness of the copper oxide film was studied. First, while the "stirring for 3 hours" was performed in Example 1 described above, the time for stirring was varied to produce seven types of copper nanoparticles having copper oxide films with different thicknesses. Specifically, the thickness of the copper oxide film was increased by increasing the stirring time, whereas the thickness of the copper oxide film was decreased by decreasing the stirring time. Then, evaluation by a bonding strength test was performed in the same manner as in Example 3 except for using the produced seven types of copper nanoparticles and diethylene glycol monobutyl ether as an organic solvent. Fig. 4 shows the results.

Fig. 4 is a graph showing the variation in the relative strength ratio against varied thickness of the copper oxide film. Fig. 4 represents the relative strength ratio to the shear strength at the copper oxide film thickness of 50 nm which is taken as 1.0. As shown in Fig. 4, it was found that when the thickness of the copper oxide film was 1 nm to 50 nm, the relative strength ratio exceeds 1.0. Thus, it was found that the thickness of the copper oxide film formed in the surface of the copper nanoparticles is preferably 1 nm to 50 nm.

Although not shown in the graph of Fig. 4, a metal bonding material was produce in the same manner as in the method for producing a metal bonding material used in the evaluation of Fig. 4 using the copper nanoparticles produced in Comparative Example 1 (the copper nanoparticles of Comparative Example 1) . Evaluation by a bonding strength test was performed in the same manner as described above using the produced metal bonding material, and then the relative strength ratio was 0.1 or less. Accordingly, as shown in Fig. 4, bonding strength better than that of conventional metal bonding materials can be obtained by a metal bonding material produced by using the copper nanoparticles of the embodiment, regardless of the thickness of the copper oxide film.

### <Example 5>

In Example 5, how varied the bonding strength is according to the amount of the organic solvent contained in the metal bonding material was studied. Here, six types of metal bonding materials were produced while varying the mixing ratio of the copper nanoparticles of Example 1 to diethylene glycol monobutyl ether as an organic solvent. Then, evaluation by a bonding strength test was performed in the same manner as in Example 3 using each of the metal bonding materials. Fig. 5 shows the results.

Fig. 5 is a graph showing the variation in the relative strength ratio against varied amount of the organic solvent contained in the metal bonding material. Fig. 5 represents the relative strength ratio to the shear strength at a solvent amount of 12% by mass which is taken as 1.0. The value, 12% by mass, is an amount which is a boundary at which the strength starts to significantly decrease. As shown in Fig. 5, the smaller the amount of the organic solvent, the larger the relative strength ratio. In particular, when the amount of the organic solvent was 12% by mass or less, the relative strength ratio exceeded 1.0 and particularly superior bonding strength was shown. However, since the application is difficult with a deficient amount of the organic solvent, the amount is preferably 5% by mass or more from the viewpoint of easy handling.

As in the case of <Example 4>, the evaluation by a bonding strength test was performed using the copper nanoparticles of Comparative Example 1 while varying the amount of the solvent, and then the relative strength ratio was 0.1 or less regardless of the amount of the solvent. Accordingly, as shown in Fig. 5, bonding strength better than that of conventional metal bonding materials can be obtained by a metal bonding material produced by using the copper nanoparticles of the embodiment, regardless of the amount of the solvent.

### Reference Signs List

- 10: Single crystal
- 11: Copper oxide film
- 100: Copper nanoparticle

## Claims

1. A metal bonding material **characterized by** consisting essentially of:
copper nanoparticles (100), the copper nanoparticles (100) including an aggregate of a plurality of single crystals (10) having crystallinity and each single crystal having a particle size of less than 10 nm and each of the copper nanoparticles (100) having a copper oxide layer containing copper oxide formed in a surface of the copper nanoparticles (100); and
one or more organic solvents, the organic solvents each having a boiling point of 200°C to 250°C and having a chain structure having a hydroxy group at an end of the chain structure.

2. The metal bonding material according to claim 1, wherein the copper oxide layer has a thickness of 1 nm to 50 nm.

3. The metal bonding material according to claim 1 or 2, wherein the content of the organic solvent is 12% by mass or less based on the total content of the copper nanoparticles (100) and the organic solvent.

4. The metal bonding material according to claim 1 or 2, wherein the organic solvent is at least one of diethylene glycol monobutyl ether and diethylene glycol monohexyl ether.

5. The metal bonding material according to claim 1 or 2, wherein the copper oxide layer is formed on the entire surface of the copper nanoparticles (100).

6. A method for producing a metal bonded body, the method **characterized by** comprising:
an application step in which a metal bonding material consisting essentially of copper nanoparticles (100) and one or more organic solvents is applied on a surface of a first structure containing a first metal, the copper nanoparticles (100) including an aggregate of a plurality of single crystals (10) having crystallinity and each single chrystal having a particle size less than 10 nm and each of the copper nanoparticles (100) having a copper oxide layer containing copper oxide formed in a surface of the copper nanoparticles (100), the organic solvents each having a boiling point of 200°C to 250°C and having a chain structure having a hydroxy group at one end of the chain structure;
a contacting step in which a second structure containing a second metal is brought into contact with the surface having the metal bonding material applied in the application step to thereby make a state where the first structure is in contact with the second structure via the metal bonding material; and
a bonding step in which the metal bonding material is heated at a temperature of 250°C to 400°C under a reductive atmosphere in the state where the first structure is in contact with the second structure via the metal bonding material to thereby obtain a metal bonded body in which the first structure is bonded to the second structure.

7. The method for producing a metal bonded according to claim 6, the method comprising producing the metal bonding material including the following steps:
a precursor dissolution step in which a copper nanoparticle precursor containing a copper ion is dissolved in a solvent containing water to thereby obtain an aqueous solution containing a copper ion;
a copper formation step in which the aqueous solution is heated at a temperature of 60°C to 90°C for 1 hour to 5 hours while allowing an inert gas to flow in the aqueous solution to thereby produce an elemental copper particle in the aqueous solution;
a copper oxide layer formation step in which the inert gas allowed to flow in the copper formation step is stopped to form a copper oxide layer containing copper oxide on the surface of the elemental copper particle produced in the aqueous solution to thereby obtain copper nanoparticles (100) ;
a separation step in which the copper nanoparticles (100) produced in the copper oxide layer formation step is separated from the aqueous solution; and
a mixing step in which the copper nanoparticles (100) separated in the separation step is mixed with at least one organic solvent having a boiling point of 200°C to 250°C and having a chain structure having a hydroxy group at one end of the chain structure.

## Patentansprüche

1. Metallklebematerial, das **dadurch gekennzeichnet** ist, das es im Wesentlichen aus Folgendem besteht:
Kupfer-Nanopartikel (100), wobei die Kupfer-Nanopartikel (100) ein Aggregat von mehreren Einkristallen (10), die Kristallinität aufweisen, enthält, und jeder Einkristall eine Partikelgröße von weniger als 10 nm aufweist und jeder der Kupfer-Nanopartikel (100) eine Kupferoxid-Schicht aufweist, die Kupferoxid beinhaltet, das in einer Oberfläche der Kupfer-Nanopartikel (100) gebildet worden ist; und
ein oder mehrere organische Lösungsmittel, wobei die organischen Lösungsmittel jeweils einen Siedepunkt von 200°C bis 250°C aufweisen, und eine Kettenstruktur aufweisen, die an einem Ende der Kettenstruktur eine Hydroxidgruppe aufweisen.

2. Metallklebematerial nach Anspruch 1, wobei die Kupferoxid-Schicht eine Dicke von 1 nm bis 50 nm aufweist.

3. Metallklebematerial nach Anspruch 1 oder 2, wobei der Gehalt des organischen Lösungsmittels basierend auf dem Gesamtgehalt der Kupfer-Nanopartikel (100) und des organischen Lösungsmittels 12 Masse-% oder weniger beträgt.

4. Metallklebematerial nach Anspruch 1 oder 2, wobei das organische Lösungsmittel Diethylenglykolmonobutylether und/oder Diethylenglycolmonohexylether ist.

5. Metallklebematerial nach Anspruch 1 oder 2, wobei die Kupferoxid-Schicht auf der gesamten Oberfläche der Kupfer-Nanopartikel (100) gebildet ist.

6. Verfahren zum Herstellen eines metallgeklebten Körpers, wobei das Verfahren **dadurch gekennzeichnet ist, dass** es Folgendes umfasst:
einen Auftragungsschritt, in dem ein Metallklebematerial, das im Wesentlichen aus Kupfer-Nanopartikeln (100) und einem oder mehreren organischen Lösungsmitteln besteht, auf eine Oberfläche einer ersten Struktur aufgebracht wird, die ein erstes Metall beinhaltet, wobei die Kupfer-Nanopartikel (100) ein Aggregat von mehreren Einkristallen (10), die Kristallinität aufweisen, enthält und jeder Einkristall eine Partikelgröße von weniger als 10 nm aufweist und jeder der Kupfer-Nanopartikel (100) eine Kupferoxid-Schicht aufweist, die Kupferoxid enthält, das in einer Oberfläche der Kupfer-Nanopartikel (100) gebildet worden ist, wobei die organischen Lösungsmittel jeweils einen Siedepunkt von 200°C bis 250°C aufweisen und eine Kettenstruktur aufweisen, die an einem Ende der Kettenstruktur eine Hydroxidgruppe aufweisen;
einen Kontaktierungsschritt, in dem eine zweite Struktur, die ein zweites Metall beinhaltet, in Kontakt mit der Oberfläche gebracht wird, auf die in dem Auftragungsschritt das Metallklebematerial aufgetragen worden ist, um dadurch einen Zustand herzustellen, in dem sich die erste Struktur über das Metallklebematerial mit der zweiten Struktur im Kontakt befindet; und
einen Klebeschritt, in dem das Metallklebematerial in dem Zustand, in dem sich die erste Struktur über das Metallklebematerial mit der zweiten Struktur in Kontakt befindet, bei einer Temperatur von 250°C bis 400°C unter einer reduzierenden Atmosphäre erhitzt wird, um dadurch einen metallgeklebten Körper zu erhalten, in dem die erste Struktur an die zweite Struktur geklebt ist.

7. Verfahren zum Erzeugen eines metallgeklebten Körpers nach Anspruch 6, wobei das Verfahren das Erzeugen des Metallklebematerials, das die folgenden Schritte enthält, umfasst:
einen Vorläufer-Lösungsschritt, in dem ein Kupfer-Nanopartikelvorläufer, der ein Kupferion beinhaltet, in einem Lösungsmittel, das Wasser beinhaltet, gelöst wird, um dadurch eine wässrige Lösung, die ein Kupferion beinhaltet, zu erhalten;
einen Kupfer-Bildungsschritt, in dem die wässrige Lösung für 1 Stunde bis 5 Stunden bei einer Temperatur von 60°C bis 90°C erhitzt wird, während einem Inertgas erlaubt wird, in die wässrige Lösung zu strömen, um dadurch ein Partikel aus elementarem Kupfer in der wässrigen Lösung zu erzeugen;
einen Kupferoxid-Schicht-Bildungsschritt, in dem das Inertgas, dem in dem Kupfer-Bildungsschritt erlaubt worden ist, zu strömen, gestoppt wird, um auf der Oberfläche der Partikel aus elementaren Kupfer, die in der wässrigen Lösung erzeugt worden sind, eine Kupferoxid-Schicht, die Kupferoxid beinhaltet, zu bilden, um dadurch Kupfer-Nanopartikel (100) zu erhalten;
einen Trennungsschritt, in dem die Kupfer-Nanopartikel (100), die in dem Kupferoxid-Schicht-Bildungsschritt erzeugt worden sind, von der wässrigen Lösung getrennt werden; und
einen Mischungsschritt, in dem die Kupfer-Nanopartikel (100), die in dem Trennungsschritt getrennt worden sind, mit mindestens einem organischen Lösungsmittel, das einen Siedepunkt von 200°C bis 250°C aufweist, und das eine Kettenstruktur aufweist, die an einem Ende der Kettenstruktur eine Hydroxidgruppe aufweist, gemischt werden.

## Revendications

1. Matériau de liaison métallique **caractérisé en ce qu'**il est constitué essentiellement de :
nanoparticules de cuivre (100), les nanoparticules de cuivre (100) incluant un agrégat d'une pluralité de monocristaux (10) ayant une cristallinité et chaque monocristal ayant une taille particulaire inférieure à 10 nm et chacune des nanoparticules de cuivre (100) ayant une couche d'oxyde de cuivre contenant de l'oxyde de cuivre formé dans une surface des nanoparticules de cuivre (100) ; et
un ou plusieurs solvants organiques, les solvants organiques ayant chacun un point d'ébullition de 200 °C à 250 °C et ayant une structure en chaîne ayant un groupe hydroxy à une extrémité de la structure en chaîne.

2. Matériau de liaison métallique selon la revendication 1, dans lequel la couche d'oxyde de cuivre a une épaisseur de 1 nm à 50 nm.

3. Matériau de liaison métallique selon la revendication 1 ou 2,
dans lequel la teneur du solvant organique est de 12 % en masse ou moins sur la base de la teneur totale des nanoparticules de cuivre (100) et du solvant organique.

4. Matériau de liaison métallique selon la revendication 1 ou 2,
dans lequel le solvant organique est au moins un élément parmi un éther monobutylique du diéthylène glycol et un éther monohexylique du diéthylène glycol.

5. Matériau de liaison métallique selon la revendication 1 ou 2, dans lequel la couche d'oxyde de cuivre est formée sur la surface entière des nanoparticules de cuivre (100).

6. Procédé pour produire un corps lié métallique, le procédé étant **caractérisé en ce qu'**il comprend :
une étape d'application dans laquelle un matériau de liaison métallique constitué essentiellement de nanoparticules de cuivre (100) et d'un ou plusieurs solvants organiques est appliqué sur une surface d'une première structure contenant un premier métal, les nanoparticules de cuivre (100) incluant un agrégat d'une pluralité de monocristaux (10) ayant une cristallinité et chaque monocristal ayant une taille particulaire inférieure à 10 nm et chacune des nanoparticules cuivre (100) ayant une couche d'oxyde de cuivre contenant de l'oxyde de cuivre formé dans une surface des nanoparticules de cuivre (100), les solvants organiques ayant chacun un point d'ébullition de 200 °C à 250 °C et ayant une structure en chaîne ayant un groupe hydroxy à une extrémité de la structure en chaîne ;
une étape de contact dans laquelle une seconde structure contenant un second métal est amené en contact avec la surface ayant le matériau de liaison métallique appliqué dans l'état d'application pour ainsi donner un état dans lequel la première structure est en contact avec la seconde structure via le matériau de liaison métallique ; et
une étape de liaison dans laquelle le matériau de liaison métallique est chauffé à une température de 250 °C à 400 °C sous une atmosphère réductrice dans l'état dans lequel la première structure est en contact avec la seconde structure via le matériau de liaison métallique pour ainsi obtenir un corps lié métallique dans lequel la première structure est liée à la seconde structure.

7. Procédé pour produire un métal lié selon la revendication 6, le procédé comprenant la production du matériau de liaison métallique incluant les étapes suivantes :
une étape de dissolution de précurseur dans laquelle un précurseur de nanoparticules de cuivre contenant un ion de cuivre est dissous dans de l'eau contenant un solvant pour ainsi obtenir une solution aqueuse contenant un ion de cuivre ;
une étape de formation de cuivre dans laquelle la solution aqueuse est chauffée à une température de 60 °C à 90 °C pendant 1 heure à 5 heures tout en permettant à un gaz inerte de s'écouler dans la solution aqueuse pour ainsi produire une particule de cuivre élémentaire dans la solution aqueuse ;
une étape de formation de couche d'oxyde de cuivre dans laquelle le gaz inerte autorisé à s'écouler dans l'étape de formation de cuivre est arrêté pour former une couche d'oxyde de cuivre contenant de l'oxyde de cuivre sur la surface de la particule de cuivre élémentaire produite dans la solution aqueuse pour ainsi obtenir des nanoparticules de cuivre (100) ;
une étape de séparation dans laquelle les nanoparticules de cuivre (100) produites dans l'étape de formation de couche d'oxyde de cuivre sont séparées de la solution aqueuse ; et
une étape de mélange dans laquelle les nanoparticules de cuivre (100) séparées dans l'étape de séparation sont mélangées avec au moins un solvant organique ayant un point d'ébullition de 200 °C à 250 °C et ayant une structure en chaîne ayant un groupe hydroxy à une extrémité de la structure en chaîne.
